# DEMANDE DE BREVET EUROPEEN

(11) **EP 2 740 638 A1**
(43) Date de publication de la demande: **11.06.2014**
(21) Numéro de dépôt: 13196517.0
(22) Date de dépôt: 10.12.2013
(51) Int. Cl.: B60S 1/34, B60S 1/52

(54) **Entraineur, dispositif de maintien d'un tuyau, notamment de liquide lave-glace, et système d'essuyage correspondant**

(30) Priorité: 10.12.2012 FR 1261821
(71) Demandeur: Valeo Systèmes d'Essuyage, 78321 Le Mesnil Saint Denis (FR)
(72) Inventeur: Peschard, David, 63114 COUDES (FR)
(74) Mandataire: Léveillé, Christophe

(57) **Abrégé**

L'invention concerne un entraîneur pour porte-balai d'un système d'essuyage pour véhicule automobile, ledit entraîneur (10) :
- comportant un orifice (11) agencé pour recevoir un arbre d'entraînement (80), l'arbre d'entraînement (80) étant rotatif autour d'un axe de rotation (X), et
- présentant un contour extérieur (13) lorsque cet entraîneur (10) est observé
suivant l'axe de rotation (X),

caractérisé en ce que l'entraîneur (10) comporte :
- un logement (30) comprenant une rainure (31) formée sur l'entraîneur (10) et agencée pour recevoir au moins partiellement le tuyau (2) dans la configuration dans laquelle lorsque l'entraîneur (10) est observé suivant l'axe de rotation (X) et lorsque le tuyau (2) est installé sur l'entraîneur (10), le tuyau (2) présente une portion courbée (12) en retrait du contour extérieur (13) de l'entraîneur (10), et
- un moyen de maintien (118) apte à maintenir le tuyau (2) dans la rainure (31) lorsque le tuyau (2) est installé sur l'entraîneur (10).

L'invention concerne également un dispositif de maintien du tuyau comprenant le tuyau et un tel entraîneur, ainsi qu'un système d'essuyage correspondant.

## Description

L'invention concerne un entraîneur pour un porte-balai d'un système d'essuyage pour véhicule automobile. L'invention concerne aussi un dispositif de maintien pour maintenir un tuyau, notamment de liquide lave-glace, sur un système d'essuyage de véhicule automobile. L'invention concerne également un système d'essuyage correspondant.

Les systèmes d'essuyage de véhicule automobile intègrent des balais d'essuyage pour évacuer toute forme d'eau ou de résidus solides, par exemple des insectes, pouvant gêner le conducteur dans sa conduite. Pour améliorer l'évacuation des résidus solides, et pour nettoyer efficacement le pare-brise, il est possible de projeter sur le pare-brise une solution, souvent hydro alcoolique de type liquide lave-glace automobile.

Le liquide lave-glace est projeté sur le pare-brise grâce à des dispositifs de projection. Ces dispositifs de projection peuvent être prévus aussi bien sur le capot grâce à des gicleurs intégrés dans ce capot ou bien être intégrés directement dans la structure du balai d'essuyage, pour améliorer le lavage du pare-brise, par l'intermédiaire d'une multitude de micro perforations le long de la lame. Dans ce dernier cas, il est nécessaire d'amener le liquide lave-glace directement au balai grâce à un tuyau, lequel doit être maintenu correctement lors des mouvements alternatifs du balai sur le pare-brise.

La demande de brevet JP2006-306286 décrit un essuie-glace comprenant une tête de bras reliée à un arbre moteur, cette tête étant recouverte par un couvercle. Un tuyau de liquide lave-glace, qui s'étend à la fois le long du bras et le long de la tête de bras, est relié à une buse de lavage fixée sur le balai pour projeter un liquide lave-glace sur le pare-brise. Le tuyau est d'abord positionné sur la tête de bras contre une paroi annulaire de cette tête de bras puis est maintenu en position par le couvercle une fois celui-ci rabattu sur la tête de bras.

Cette réalisation présente un inconvénient. En effet, pour maintenir le tuyau de liquide lave-glace sur la tête de bras, il est nécessaire d'emprisonner une portion du tuyau qui se trouve alors en contact avec deux pièces, à savoir la tête de bras et le couvercle. Le fait d'avoir deux pièces pour assurer le maintien du tuyau de liquide lave-glace peut générer des opérations de montage complexes, notamment exiger un jeu précis entre les deux pièces.

De plus, lors du montage du tuyau sur la tête de bras, il est nécessaire de maintenir temporairement en position le tuyau sur la tête pendant que l'on vient abaisser le couvercle. Cette étape de manipulation est délicate car elle demande de l'attention de la part de l'opérateur pour assurer un bon maintien du tuyau de liquide lave-glace sur la tête de bras.

Un but de l'invention est notamment de proposer un dispositif pour maintenir un tuyau, notamment de liquide lave-glace, sur un système d'essuyage de manière relativement simple.

Ce but est atteint, conformément à la présente invention, grâce à un entraîneur pour porte-balai d'un système d'essuyage pour véhicule automobile, ledit entraîneur :
- comportant un orifice agencé pour recevoir un arbre d'entraînement, l'arbre d'entraînement étant rotatif autour d'un axe de rotation, et
- présentant un contour extérieur lorsque cet entraîneur est observé suivant l'axe de rotation,
caractérisé en ce que l'entraîneur comporte :
- un logement comprenant une rainure formée sur l'entraîneur et agencée pour recevoir au moins partiellement le tuyau dans la configuration dans laquelle lorsque l'entraîneur est observé suivant l'axe de rotation et lorsque le tuyau est installé sur l'entraîneur, le tuyau présente une portion courbée en retrait du contour extérieur de l'entraîneur, et
- un moyen de maintien apte à maintenir le tuyau dans la rainure lorsque le tuyau est installé sur l'entraîneur.

L'invention permet, de maintenir la portion courbée du tuyau grâce à une seule pièce, à savoir l'entraîneur. Ceci permet d'éviter d'utiliser une pièce supplémentaire pour le maintien de la portion courbée.

Autrement dit, la portion courbée du tuyau est maintenue de manière autosuffisante par l'entraîneur.

De plus, comme la portion courbée du tuyau est en retrait du contour extérieur de l'entraîneur, cette portion courbée est cachée au moins en partie, ce qui améliore l'esthétisme du système d'essuyage.

Si on le souhaite, l'entraîneur présente une forme sensiblement allongée suivant un axe longitudinal et l'orifice se situe à proximité d'une extrémité longitudinale de l'entraîneur.

Cet orifice est par exemple de forme sensiblement circulaire lorsqu'il est observé suivant l'axe de rotation.

Avantageusement, la rainure présente une forme correspondante à la forme du tuyau destiné à être installé sur l'entraîneur. Selon un exemple de réalisation, la rainure est sensiblement cylindrique. La rainure présente un rayon de l'ordre de 2 à 3 mm, par exemple de l'ordre de 2,75 mm.

Le contour extérieur de l'entraîneur est préférentiellement sensiblement en forme d'arc de cercle autour de l'orifice.

L'entraîneur comporte avantageusement au moins une patte de maintien agencée pour maintenir la portion courbée du tuyau dans la rainure lorsque le tuyau est installé sur l'entraîneur.

Avantageusement, la patte de maintien est réalisée d'un seul tenant avec l'entraîneur.

De préférence, l'entraîneur comporte une face inférieure, destinée à être agencée en regard du capot du véhicule, et le logement est agencé sur la face inférieure de l'entraîneur.

Selon un exemple de réalisation la face inférieure est sensiblement plane.

Selon un mode de réalisation, ladite au moins une patte de maintien est raccordée à la face inférieure de l'entraîneur et présente une portion rabattue s'étendant sensiblement parallèlement à la face inférieure et destinée à venir en appui contre la portion courbée du tuyau lorsque le tuyau est installé sur l'entraîneur.

Selon un aspect de l'invention, l'entraîneur comprend une nervure formée sur la face inférieure de l'entraîneur et le moyen de maintien est raccordé à la nervure.

De manière avantageuse, la nervure est sensiblement en forme d'arc de cercle, notamment centré sur l'orifice de l'entraîneur, lorsque l'entraîneur est observé suivant l'axe de rotation.

Ladite au moins une patte de maintien peut être réalisée avec la nervure.

Selon un mode de réalisation, l'entraîneur comporte préférentiellement au moins un élément de guidage du tuyau de liquide lave-glace, notamment agencé pour guider le tuyau vers un ressort de rappel.

Selon un aspect l'entraîneur présente une forme sensiblement allongée et l'élément de guidage est agencé à proximité d'une extrémité longitudinale de l'entraîneur, notamment à l'extrémité longitudinale opposée à l'orifice.

L'élément de guidage peut être réalisé sous la forme d'un crochet définissant un logement semi-ouvert sensiblement cylindrique, pour une coopération de forme avec un tuyau de forme sensiblement cylindrique.

L'invention concerne également un dispositif de maintien pour maintenir un tuyau de liquide de lavage, ledit dispositif comportant : le tuyau, un entraîneur comportant un orifice agencé pour recevoir un arbre de rotation, cet arbre étant rotatif autour d'un axe de rotation, l'entraîneur présentant un contour extérieur lorsque cet entraîneur est observé suivant l'axe de rotation,
caractérisé en ce que l'entraîneur comporte :
- un logement comprenant une rainure formée sur l'entraîneur et agencée pour recevoir au moins partiellement le tuyau dans la configuration dans laquelle le tuyau comporte une portion courbée autour de l'orifice, et lorsque le dispositif est observé suivant l'axe de rotation, la portion courbée du tuyau est en retrait du contour extérieur de l'entraîneur, et
- un moyen de maintien du tuyau dans la rainure.

De manière particulièrement avantageuse, le dispositif de maintien est agencé pour permettre un montage amovible du tuyau dans le logement. Le tuyau est donc apte à être agencé de façon amovible dans le logement et peut être remplacé aisément.

Le tuyau de liquide lave-glace est agencé de manière à pouvoir être relié à une première extrémité à un réservoir de liquide lave-glace et à une deuxième extrémité à un dispositif de projection de liquide lave-glace, notamment associé à un balai d'essuie glace.

Le tuyau est flexible, étant de manière avantageuse réalisé en éthylène-propylène diène monomère, connu sous le signe EPDM.

L'invention a également pour objet un système d'essuyage pour véhicule automobile apte à entraîner un arbre d'entraînement ou arbre de rotation, caractérisé en ce qu'il comporte un dispositif de maintien tel que défini précédemment, et l'entraîneur du dispositif de maintien est apte à coopérer avec l'arbre d'entraînement.

Selon un aspect de l'invention, le système d'essuyage comporte un moteur d'entraînement et/ou une tringlerie agencé pour coopérer avec l'arbre d'entraînement étant apte à coopérer avec l'entraîneur du dispositif de maintien.

L'arbre d'entraînement est ainsi relié d'une part à l'entraîneur et d'autre part au moteur d'entraînement et/ou à la tringlerie.

Si on le souhaite, l'orifice de l'entraîneur est apte à coopérer avec l'extrémité supérieure de l'arbre d'entraînement et le capuchon est apte à venir coiffer l'extrémité supérieure de l'arbre d'entraînement. Ce capuchon est fixé de préférence de manière amovible sur l'arbre d'entraînement.

Le système d'essuyage peut comporter : un bras et un carter de porte-balai agencé pour coopérer avec l'entraîneur, un balai d'essuyage agencé pour coopérer avec le bras, un dispositif de projection de liquide lave-glace, associé au bras.

Le système d'essuyage comporte également, de préférence, un réservoir ainsi qu'une pompe de liquide lave-glace, relié a une extrémité du tuyau du dispositif de maintien, la pompe permettant d'acheminer le liquide lave-glace du réservoir au dispositif de projection. La pompe est agencée de manière à être déclenchée par l'utilisateur depuis l'intérieur du véhicule.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une première vue en perspective schématique et partielle d'un système d'essuyage,
- la figure 2 est une deuxième vue en perspective schématique et partielle du système d'essuyage,
- la figure 3 est une vue de côté schématique et partielle du système d'essuyage,
- la figure 4 est une vue schématique et partielle d'un entraîneur selon un premier mode de réalisation du système d'essuyage sans le tuyau,
- la figure 5 est une vue schématique et partielle de l'entraîneur selon le premier mode de réalisation du système d'essuyage avec le tuyau,
- la figure 6 est une vue partielle de l'entraîneur et du tuyau du système d'essuyage de la figure 5, et
- la figure 7a est une première vue en perspective d'un entraîneur selon un deuxième mode de réalisation du système d'essuyage avec le tuyau,
- la figure 7b est une deuxième vue en perspective sensiblement de côté de l'entraîneur selon le deuxième mode de réalisation avec le tuyau,
- la figure 7c est une troisième vue en perspective sensiblement de côté de l'entraîneur selon le deuxième mode de réalisation avec le tuyau, et
- la figure 7d est une vue en perspective de l'entraîneur selon le deuxième mode de réalisation sans le tuyau.

Dans ces figures, les éléments sensiblement identiques portent les mêmes références.

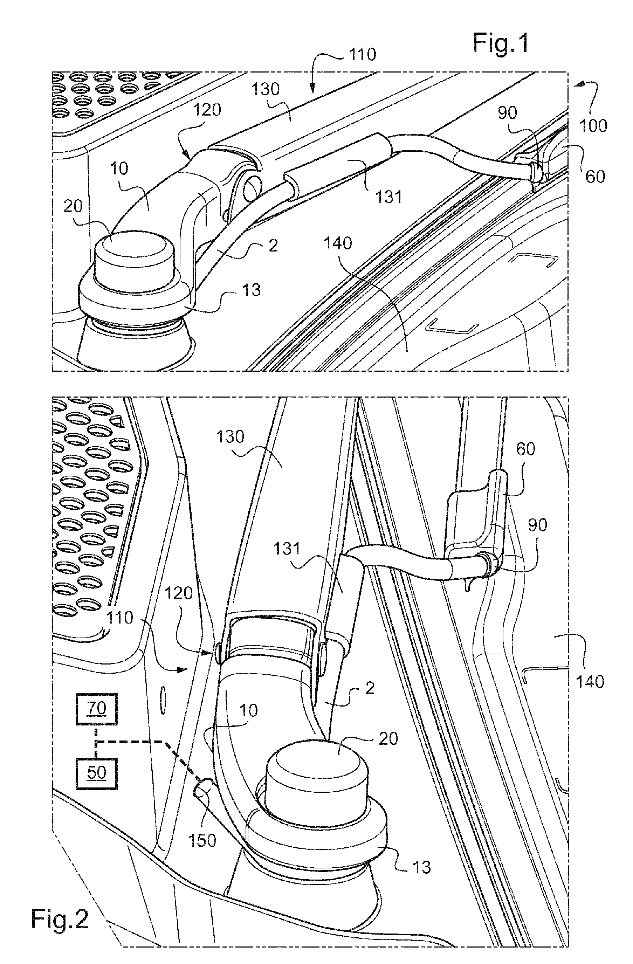

Les figures 1 à 3 représentent de façon partielle et schématique un système d'essuyage 100 pour véhicule automobile, plus précisément pour le nettoyage d'un pare-brise 140 du véhicule.

Le système d'essuyage 100 comprend :
- un porte-balai 110 installé sur le véhicule portant un balai d'essuyage 60,
- au moins un dispositif de projection 90 d'un liquide de lavage du pare-brise 140, appelé liquide lave-glace,
- un tuyau 2 d'acheminement du liquide lave-glace au dispositif de projection 90, et
- un dispositif de maintien 1 du tuyau 2 de façon à le maintenir correctement lors de mouvements alternatifs du balai d'essuyage 60 sur le pare-brise 140.

Le porte-balai 110 comprend un entraîneur 10 décrit plus en détail par la suite. Le porte-balai 110 comprend outre l'entraîneur 10, un bras dans le prolongement d'un carter de porte-balai 130 rendu solidaire de l'entraîneur 10. Le carter de porte-balai 130 est par exemple réalisé en tôle galvanisée ou électrozinguée.

La solidarisation entre l'entraîneur 10 et le carter de porte-balai 130 peut être réalisée par exemple au moyen d'un ensemble pivot 120. L'ensemble pivot 120 permet à l'utilisateur de pouvoir faire pivoter le carter du porte-balai 130 par rapport à l'entraîneur 10 et ainsi permettre la manipulation d'un balai d'essuyage 60 placé à une extrémité du bras.

L'entraîneur 10 est apte à être actionné en rotation sur une plage angulaire prédéfinie par l'intermédiaire d'un arbre d'entraînement 80 d'axe de rotation X. L'entraîneur 10 est donc apte à coopérer avec l'arbre d'entraînement 80.

Cette rotation assure le balayage du bras et du balai d'essuyage 60 sur le pare-brise 140. Le carter du porte-balai 130 est articulé en pivotement autour de l'ensemble pivot 120, ici sensiblement perpendiculaire à l'axe de rotation X de l'arbre d'entraînement 80.

Le balai d'essuyage 60 assure l'évacuation de l'eau ou de résidus solides présents sur le pare-brise 140 du véhicule. Un tel balai d'essuyage 60 est par exemple de type à lame plate (« flat blade », en anglais), c'est-à-dire comprenant une raclette, une ou plusieurs vertèbres de rigidification et une fixation unique centrale réalisée par un connecteur mécanique lié à l'extrémité du bras. Un tel balai d'essuyage 60 plat peut également comporter un déflecteur d'air solidaire du balai et agencé pour exploiter l'effet dynamique du déplacement du véhicule pour augmenter la force d'appui du balai d'essuyage 60 sur le pare-brise 140.

Le porte balai 110 ou le balai d'essuyage 60 sont associés à un dispositif de projection 90 du liquide de lavage du pare-brise 140, dit liquide lave-glace. Selon l'exemple de réalisation représenté sur la figure 1, le dispositif de projection 90 peut comporter une canalisation intégrée au balai d'essuyage 60, et qui chemine le long de l'axe longitudinal de ce balai d'essuyage 60. Un tel conduit peut par exemple être formé dans une partie de la structure du déflecteur d'air. Selon un exemple de réalisation non représenté, le dispositif de projection 90 peut comporter une rampe de projection distincte du balai d'essuyage 60 et rapportée sur le bras.

Le dispositif de projection 90 comprend des gicleurs ou orifices d'arrosage sous pression, permettant la distribution du liquide lave-glace sur la surface vitrée, qui sont selon cet exemple de réalisation intégrés dans la structure du balai d'essuyage 60.

Le dispositif de projection 90 du liquide lave-glace est alimenté en liquide lave-glace par le tuyau 2.

Le tuyau 2 peut être réalisé en un matériau flexible, tel qu'en EPDM (éthylène-propylène diène monomère).

Dans l'exemple décrit, le tuyau 2 s'étend depuis une sortie sous capot 150 jusqu'au balai d'essuyage 60.

Ce tuyau 2 peut, par exemple, être solidaire du carter du porte-balai 130 à l'aide de moyens de solidarisation 131 qui maintiennent en position le tuyau 2 sur le carter du porte-balai 130. Selon l'exemple illustré sur la figure 1, les moyens de solidarisation sont sensiblement en forme de pontets. Les pontets 131 sont par exemple réalisés en matière plastique, tel que du polyamide 6.6. Les pontets 131 peuvent être clippés sur le carter du porte-balai 130.

Le liquide lave-glace est contenu dans un réservoir 50. Le tuyau 2 est relié à une première extrémité sous capot (non visible sur les figures) au réservoir 50 de liquide lave-glace associé à une pompe 70 permettant d'acheminer le liquide lave-glace du réservoir 50 jusqu'au dispositif de projection 90. Cette liaison entre le tuyau 2 et le réservoir 50 associé à une pompe 70 est représentée de façon schématique et illustrative par des tirets sur la figure 2. La pompe 70 est agencée de manière à pouvoir être déclenchée depuis l'intérieur du véhicule par le conducteur ou par un système automatisé.

Le tuyau 2 de liquide lave-glace est relié à une deuxième extrémité au dispositif de projection 90 de liquide lave-glace.

Le tuyau 2 est en outre maintenu sur l'entraîneur 10 à l'aide du dispositif de maintien 1. Le tuyau 2 ainsi installé et maintenu sur l'entraîneur 10 présente une portion sensiblement courbée 12.

Le dispositif de maintien 1 comprend :
- le tuyau 2, et
- l'entraîneur 10 du porte-balai 110.

L'entraîneur 10 est par exemple réalisé d'un seul bloc par moulage d'un matériau de type aluminium ou zamak.

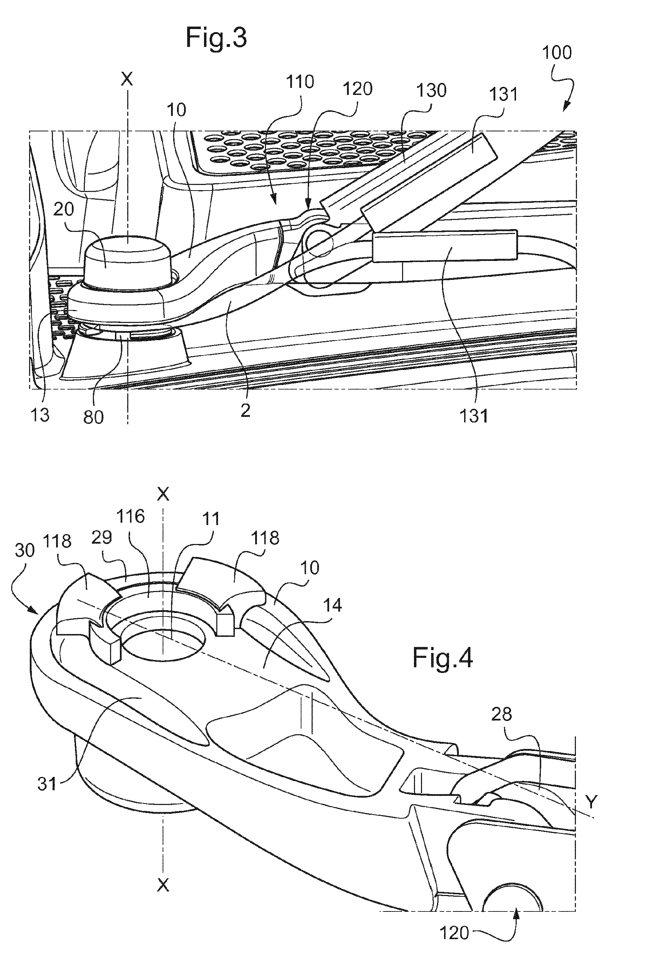

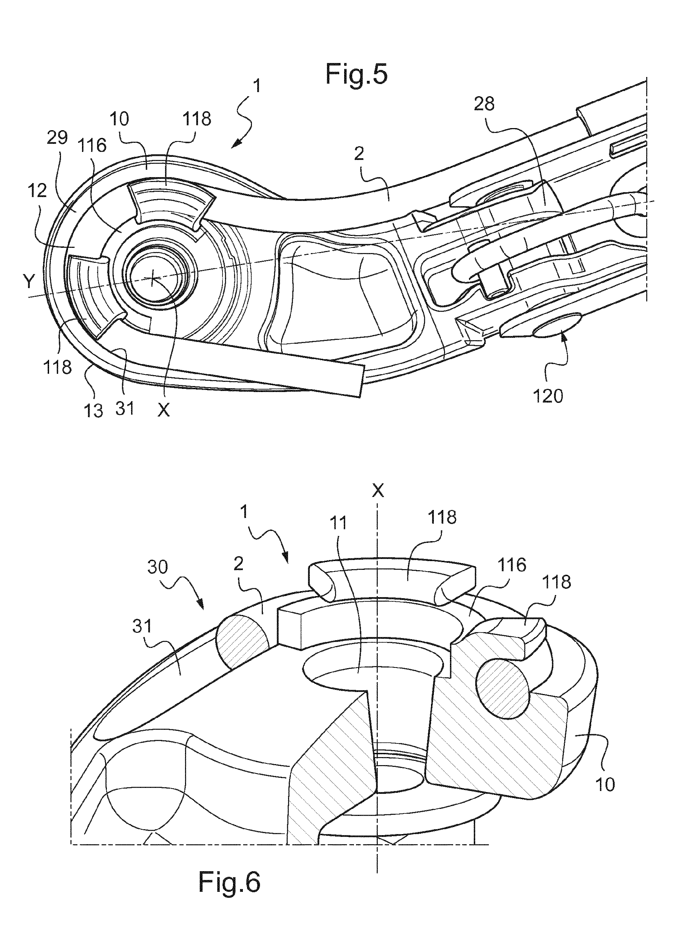

L'entraîneur 10 s'étend globalement longitudinalement selon un axe Y. Selon le mode de réalisation décrit, l'entraîneur 10 s'étend selon une direction parallèle, ou sensiblement parallèle, à une direction d'extension du carter du porte-balai 130 du porte-balai 110 entre deux extrémités longitudinales opposées 28 et 29, visibles sur les figures 4 et 5.

La première extrémité 28 de l'entraîneur 10 est configurée pour autoriser la fixation de l'entraîneur 10 sur le carter du porte-balai 130, par exemple par l'ensemble pivot 120.

La seconde extrémité 29 est agencée pour solidariser l'entraîneur 10 sur l'arbre d'entraînement 80, d'axe de rotation X. À cet effet, l'entraîneur 10 comprend au niveau de la seconde extrémité 29, un orifice 11 agencé pour recevoir l'arbre d'entraînement 80. Cet orifice 11 présente une forme sensiblement circulaire lorsqu'il est observé suivant l'axe X.

L'entraîneur 10 permet de transmettre le mouvement de rotation de l'arbre d'entraînement 80 vers le bras.

L'entraîneur 10 est rendu solidaire de l'arbre d'entraînement 80 par un écrou (non représenté sur la figure 1) qui est vissé sur l'arbre d'entraînement 80. L'écrou (non visible sur les figures) est coiffé par un capuchon 20 ou cache-écrou qui vient sur le dessus de l'entraîneur 10, c'est-à-dire sur une face de l'entraîneur, dite face supérieure, du côté opposé au capot du véhicule. Cette face supérieure est par exemple sensiblement plane.

Le capuchon 20 présente avantageusement un contour sensiblement circulaire.

Le capuchon 20 est par exemple obtenu par moulage par injection en matière plastique, tel que du polyéthylène.

L'entraîneur 10 comporte, au niveau de la seconde extrémité 29, un contour extérieur 13 en arc de cercle lorsque l'entraîneur 10 est observé suivant l'axe X.

L'entraîneur 10 présente une face inférieure 14 en regard du capot du véhicule par opposition à une face extérieure visible de l'extérieur du véhicule. La face inférieure 14 est sensiblement plane selon l'exemple illustré sur les figures 4 et 5. L'entraîneur 10 comporte autour de l'orifice 11 et sur sa face inférieure 14, un logement 30 visible sur la figure 4 agencé pour recevoir la portion courbée 12 du tuyau 2 de liquide lave-glace.

Comme illustré sur les figures 1 à 3, la portion courbée 12 du tuyau 2 est en retrait du contour extérieur 13 de l'entraîneur 10 lorsque le dispositif de maintien 1 est observé suivant l'axe de rotation X.

Ainsi, lorsque l'entraîneur 10 est rabattu contre le pare-brise 140 comme illustré sur la figure 1, la portion courbée 12 est invisible lorsque le dispositif 1 est observé suivant l'axe de rotation X.

Ceci permet de renforcer l'esthétique du dispositif 1.

Le logement 30 de l'entraîneur 10 est décrit plus en détail en référence aux figures 4 et 5.

Selon le mode de réalisation illustré sur la figure 4, le logement 30 de l'entraîneur 10 comporte une rainure 31 formée sur la face inférieure 14 de l'entraîneur 10.

La rainure 31 est conformée pour une coopération de forme avec le tuyau 2. Ainsi, la rainure 31 présente une forme et une profondeur correspondantes à la forme et aux dimensions du tuyau 2.

Selon l'exemple illustré, le tuyau 2 est sensiblement cylindrique et la rainure 31 est sensiblement cylindrique et présente par exemple un rayon de l'ordre de 2 à 3 mm, par exemple de 2,75 mm. Ce rayon est donné à titre d'exemple non limitatif pour un tuyau 2 standard de diamètre de l'ordre de 5,5 mm +/- 0,3 mm.

Bien entendu d'autres formes et d'autres dimensions peuvent être envisagés selon les besoins.

L'entraîneur 10 comporte également au moins un moyen de maintien de la portion courbée 12 du tuyau dans la rainure 31. Il peut s'agir notamment d'au moins une patte de maintien 118. Selon l'exemple illustré sur la figure 4, l'entraîneur 10 comporte deux pattes de maintien 118 agencées pour maintenir la portion courbée 12 du tuyau 2 dans le logement 30.

Bien entendu, on peut prévoir plus de deux pattes de maintien 118.

Les pattes de maintien 118 peuvent se raccorder sur la face inférieure 14 de l'entraîneur 10. Les pattes de maintien 118 peuvent être réalisées d'un seul tenant avec l'entraîneur 10.

Les pattes de maintien 118 présentent respectivement une portion rabattue venant en appui sur la portion courbée 12 du tuyau 2.

Selon l'exemple illustré, la portion rabattue d'une patte de maintien 118 s'étend sensiblement parallèlement à la face inférieure 14 de l'entraîneur 10.

Ces pattes de maintien 118 permettent de maintenir efficacement la portion courbée 12 du tuyau durant les mouvements oscillatoires du carter du porte-balai 130 d'essuie-glace.

Grâce à la rainure 31 et au moyen de maintien tel que les pattes de maintien 118, le montage du tuyau 2 sur l'entraîneur 10 est amovible permettant, le cas échéant, de changer le tuyau 2 relativement facilement.

Selon une variante illustrée sur la figure 4, l'entraîneur 10 peut comporter une nervure 116. La nervure 116 est par exemple en forme d'arc de cercle. Cette forme en arc de cercle peut être centrée sur l'orifice 11, lorsque l'entraîneur 10 est observé suivant l'axe de rotation X. En outre, la nervure 116 peut être agencée à proximité de l'orifice 11.

Les pattes de maintien 118 peuvent se raccorder au sommet de la nervure 116 (voir figures 4 à 6). Les pattes de maintien 118 peuvent être réalisées d'une seule pièce avec la nervure 116.

La longueur de l'arc de cercle de la nervure 116 peut être adaptée en fonction du nombre de pattes de maintien 118 se raccordant à la nervure 116. Selon une variante non illustrée, la nervure 116 peut présentée une forme de cercle.

Bien entendu, on peut prévoir une ou plusieurs nervures 116.

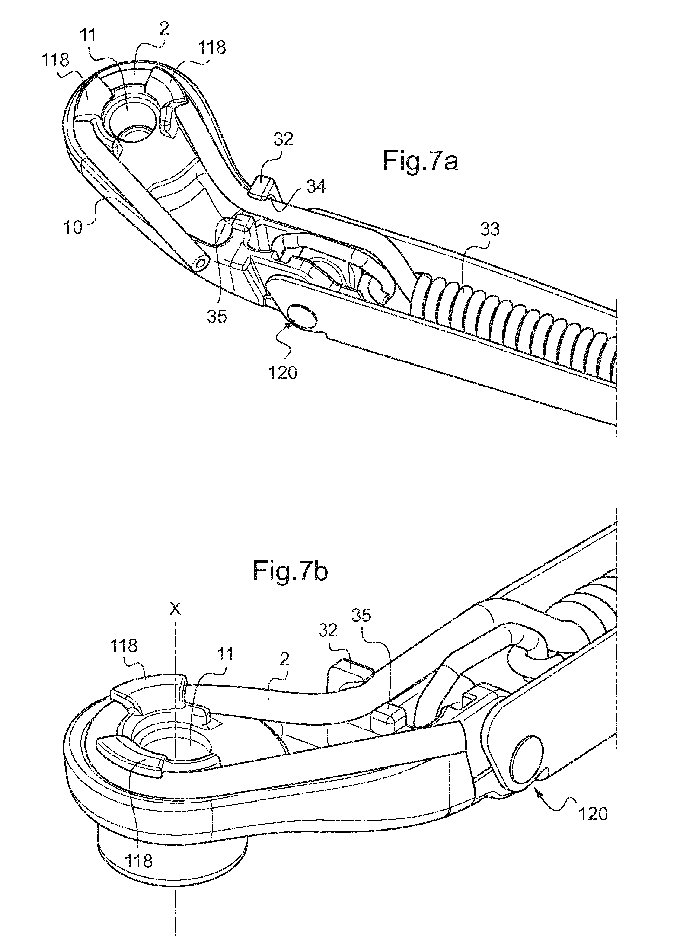

Selon un deuxième mode de réalisation illustré sur les figures 7a à 7d, l'entraîneur 10 comporte en outre un élément de guidage 32 du tuyau 2 de liquide lave glace, agencé pour guider le tuyau 2 notamment vers un ressort de rappel 33. Ce ressort 33 sert à appliquer une pression sur le balai d'essuie-glace pour que celui-ci se plaque correctement sur la vitre du part brise 140.

L'élément de guidage 32 est conformé pour permettre le passage et le maintien du tuyau 2, l'élément de guidage 32 présente donc une forme et des dimensions complémentaires à celles du tuyau 2.

Ici, le tuyau 2 est sensiblement cylindrique et l'élément de guidage 32 est par exemple réalisée sous la forme d'un crochet recourbé 32 présentant un logement semi-ouvert 34 sensiblement cylindrique permettant le guidage et le maintien du tuyau 2. De façon similaire à la rainure 31, le rayon du logement semi-ouvert 34 peut être de l'ordre de 2 à 3 mm, par exemple de 2,75 mm.

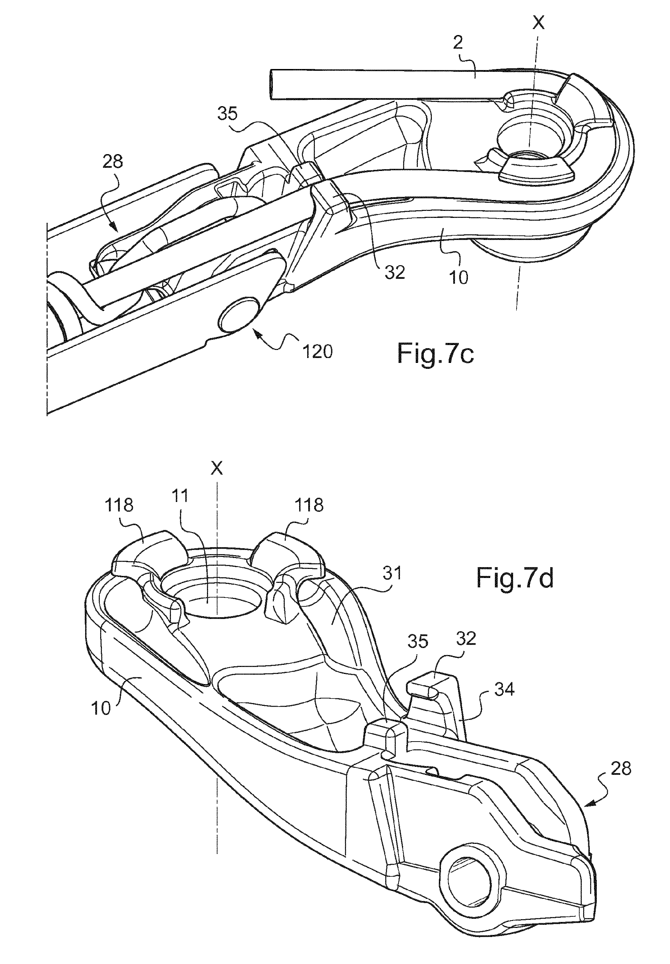

L'élément de guidage 32 est agencé selon l'exemple illustré sur la figure 7 sensiblement sur le côté à proximité de la première extrémité 28. Cet agencement permet notamment un meilleur guidage du tuyau 2 vers le ressort de rappel 33.

En outre, l'entraîneur 10 peut comporter une butée 35 pour empêcher le déplacement latéral du tuyau 2 et ainsi améliorer le guidage du tuyau 2 vers le ressort 33. Cette butée 35 est agencée en vis-à-vis du logement semi-ouvert 34 défini par le crochet 32.

L'élément de guidage 32 et la butée 35 se raccordent à la face inférieure 14 de l'entraîneur 10 dans cet exemple.

Ainsi, afin de monter le tuyau 2 dans l'entraîneur 10, le tuyau 2 peut être introduit sensiblement radialement dans la rainure 31 de l'entraîneur 10. Le terme « radialement » est utilisé en référence à l'axe de rotation X. Le tuyau 2 est alors déformé de manière à présenter la portion courbée 12 insérée dans la rainure 31 formée sur l'entraîneur 10.

Le tuyau 2 est alors maintenu dans cette rainure 31 à l'aide de la ou des pattes de maintien 118 disposées autour de l'orifice 11 de l'entraîneur 10.

Puis le tuyau 2 est dirigé vers le côté du carter du porte-balai 130 auquel il est fixe par exemple à l'aide des pontets 131, ou selon la variante illustrée sur la figure 7 vers le ressort de rappel 33 par exemple à l'aide de l'élément de guidage réalisée sous la forme d'un crochet 32.

Ainsi la portion courbée du tuyau 2 est maintenue grâce à une seule pièce, à savoir l'entraîneur 10 sans nécessiter de pièce supplémentaire pour le maintien de la portion courbée de tuyau 2.

De plus, comme la portion courbée 12 du tuyau 2 est en retrait du contour extérieur 13 de l'entraîneur 10, cette portion courbée 12 est cachée au moins en partie, ce qui améliore l'esthétisme du système d'essuyage.

## Revendications

1. Entraîneur pour porte-balai d'un système d'essuyage pour véhicule automobile, ledit entraîneur (10) :
- comportant un orifice (11) agencé pour recevoir un arbre d'entraînement (80), l'arbre d'entraînement (80) étant rotatif autour d'un axe de rotation (X), et
- présentant un contour extérieur (13) lorsque cet entraîneur (10) est observé suivant l'axe de rotation (X),
**caractérisé en ce que** l'entraîneur (10) comporte :
- un logement (30) comprenant une rainure (31) formée sur l'entraîneur (10) et agencée pour recevoir au moins partiellement le tuyau (2) dans la configuration dans laquelle lorsque l'entraîneur (10) est observé suivant l'axe de rotation (X) et lorsque le tuyau (2) est installé sur l'entraîneur (10), le tuyau (2) présente une portion courbée (12) en retrait du contour extérieur (13) de l'entraîneur (10), et
- un moyen de maintien (118) apte à maintenir le tuyau (2) dans la rainure (31) lorsque le tuyau (2) est installé sur l'entraîneur (10).

2. Entraîneur (10) selon la revendication 1, dans lequel la rainure (31) est sensiblement cylindrique.

3. Entraîneur (10) selon la revendication 2, dans lequel la rainure (31) présente un rayon de l'ordre de 2 à 3 mm.

4. Entraîneur (10) selon l'une des revendications précédentes, **caractérisé en ce que** le contour extérieur (13) de l'entraîneur (10) est sensiblement un arc de cercle autour de l'orifice (11).

5. Entraîneur (10) selon l'une des revendications précédentes, dans lequel le moyen de maintien (118) comporte au moins une patte de maintien (118) agencée pour maintenir la portion courbée (12) du tuyau (2) dans la rainure (31) lorsque le tuyau (2) est installé sur l'entraîneur (10).

6. Entraîneur (10) selon l'une quelconque des revendications précédentes, comprenant une face inférieure (14) destinée à être agencée en regard du capot du véhicule, et dans lequel le logement (30) est formé sur la face inférieure (14).

7. Entraîneur (10) selon la revendication précédente, dans lequel le moyen de maintien (118) est agencé sur la face inférieure (14) de l'entraîneur (10).

8. Entraîneur (10) selon les revendications 5 et 7, dans lequel ladite au moins une patte de maintien (118) est raccordée à la face inférieure (14) de l'entraîneur (10) et présente une portion rabattue s'étendant sensiblement parallèlement à la face inférieure (14) et destinée à venir en appui contre la portion courbée du tuyau (2) lorsque le tuyau (2) est installé sur l'entraîneur (10).

9. Entraîneur (10) selon l'une quelconque des revendications 6 à 8, comprenant une nervure (116) formée sur la face inférieure (14) de l'entraîneur (10) et dans lequel le moyen de maintien (118) est raccordé à la nervure (116).

10. Entraîneur (10) selon la revendication précédente, dans lequel la nervure (116) est sensiblement en forme d'arc de cercle, centré sur l'orifice (11) de l'entraîneur (10) lorsque l'entraîneur est observé suivant l'axe de rotation (X).

11. Entraîneur (10) selon l'une quelconque des revendications précédentes, comprenant un élément de guidage (32) du tuyau (2).

12. Entraîneur (10) selon la revendication précédente, présentant une forme sensiblement allongée et l'élément de guidage (32) est agencé à proximité d'une extrémité longitudinale (28) de l'entraîneur (10).

13. Entraîneur (10) selon l'une des revendications 11 ou 12, dans lequel l'élément de guidage est réalisé sous la forme d'un crochet (32) définissant un logement semi-ouvert (34) sensiblement cylindrique.

14. Dispositif de maintien (1) pour maintenir un tuyau (2) de liquide de lavage, ledit dispositif comportant :
- le tuyau (2),
- un entraîneur (10) comportant un orifice (11) agencé pour recevoir un arbre de rotation (80), cet arbre étant rotatif autour d'un axe de rotation (X), l'entraîneur (10) présentant un contour extérieur (13) lorsque cet entraîneur (10) est observé suivant l'axe de rotation (X),
**caractérisé en ce que** l'entraîneur (10) comporte :
- un logement (30) comprenant une rainure (31) formée sur l'entraîneur (10) et agencée pour recevoir au moins partiellement le tuyau (2) dans la configuration dans laquelle le tuyau (2) comporte une portion courbée (12) autour de l'orifice (11), et lorsque le dispositif est observé suivant l'axe de rotation (X), la portion courbée (12) du tuyau (2) est en retrait du contour extérieur (13) de l'entraîneur (10), et
- un moyen de maintien (118) du tuyau (2) dans la rainure (31).

15. Dispositif de maintien (1) selon la revendication précédente, **caractérisé en ce que** le tuyau (2) est apte à être agencé de façon amovible dans le logement (30).

16. Système d'essuyage (100) pour véhicule automobile apte à entraîner un arbre d'entraînement (80), **caractérisé en ce qu'**il comporte un dispositif de maintien (1) selon l'une des revendications 14 ou 15, et l'entraîneur (10) du dispositif de maintien (1) est apte à coopérer avec l'arbre d'entraînement (80).
